# EUROPEAN PATENT APPLICATION

(11) **EP 2 464 156 A1**
(43) Date of publication of application: **13.06.2012**
(21) Application number: 11191785.2
(22) Date of filing: 02.12.2011
(51) Int. Cl.: H04W 12/08, H04L 29/06, B60R 25/00, G07C 9/00

(54) **System for preventing establishment of unauthorized communication**

(30) Priority: 07.12.2010 JP 2010272606
(71) Applicant: Kabushiki Kaisha Tokai Rika Denki Seisakusho, Ohguchi-cho Niwa-gun Aichi 480-0195 (JP)
(72) Inventor: Mori, Hiroshi, Niwa-gun, Aichi 480-0195 (JP)
(74) Representative: Löfgren, Håkan Bengt Alpo

(57) **Abstract**

A system (17) that prevents unauthorized establishment of wireless bidirectional communication between a communication master (5) and a communication terminal (2). The system (17) includes a strength measurement signal transmission circuit (19) that transmits a received signal strength measurement signal (18), which is used to measure received signal strength at the communication terminal (2), a number of times with different transmission strengths during a single wireless bidirectional communication session. A received signal strength measurement circuit (23) measures the received signal strength of the received signal strength measurement signal (18) whenever the received signal strength measurement signal (18) is received by the communication terminal (2). A measurement result transmission circuit (24) transmits received signal strength measurement results as a single response signal (Srs) to the communication master (5) from the communication terminal (2) during the single communication session. A check circuit (26) checks whether the current bidirectional communication is authorized based on the received signal strength measurement results from the communication terminal (2).

## Description

This application is based upon and claims the benefit of priority from prior Japanese Patent Application No. 2010-272606, filed on December 7, 2010, the entire contents of which are incorporated herein by reference.

The present invention relates to a system that prevents establishment of unauthorized wireless communication between a communication terminal and a communication master.

Japanese Laid-Open Patent Publication No. 2005-262915 describes a conventional electronic key system that verifies an ID code of an electronic key transmitted through wireless communication. The conventional electronic key system is, for example, a key-operation-free system. In the key-operation-free system, when an electronic key receives a request wirelessly transmitted from a vehicle, the electronic key wirelessly sends back an ID code to the vehicle. The vehicle receives and verifies the ID of the electronic key. The key-operation-free system permits the locking or unlocking of the vehicle doors when ID verification is accomplished outside the vehicle. The key-operation-free system permits the starting of the engine when ID verification is accomplished inside the vehicle.

A relay may be used to accomplish ID verification in an unauthorized manner in the conventional electronic key system (refer to Japanese Laid-Open Patent Publication No. 2001-342758). In one such example, when the electronic key is located distant from the vehicle, a plurality of relays may be arranged between the electronic key and the vehicle to relay radio waves and establish wireless communication between the electronic key and the vehicle. In such a case, ID verification may be accomplished without the user knowing, and a theft may be able to unlock the vehicle doors and start the engine.

To prevent such unauthorized act using relays, communication may be repeated twice between the electronic key and the vehicle while changing the strength of a radio wave signal. In this case, when unauthorized communication is performed with relays, the strength of a radio wave signal transmitted from each relay would be fixed. Thus, when a radio wave signal sent from the electronic key to the vehicle is fixed, such communication may be determined as being unauthorized. However, the same communication is required to be performed twice. This doubles the communication time.

It is an object of the present invention to provide a system for preventing establishment of unauthorized communication that shortens the communication time for monitoring unauthorized communication.

To achieve the above object, a first aspect of the present invention is an unauthorized communication establishment prevention system that prevents unauthorized establishment of wireless bidirectional communication between a communication master and a communication terminal. The system includes a strength measurement signal transmission circuit that transmits a received signal strength measurement signal, which is used to measure a received signal strength at the communication terminal, a number of times with different transmission strengths during a single wireless bidirectional communication session. A received signal strength measurement circuit measures the received signal strength of the received signal strength measurement signal whenever the received signal strength measurement signal is received by the communication terminal. A measurement result transmission circuit transmits a plurality of received signal strength measurement results as a single response signal to the communication master from the communication terminal during the single communication session. A check circuit checks whether or not the current bidirectional communication is authorized based on the received signal strength measurement results from the communication terminal.

In the first aspect, the strength measurement signal transmission circuit that transmits the received signal strength measurement signal for a number of times with different transmission strengths during a single wireless bidirectional communication session. In accordance with the received signal strength measurement results of the received signal strength measurement signal, the communication master determines whether the current bidirectional communication is authorized. Thus, the determination of whether or not the current wireless bidirectional communication is authorized is performed in a single communication session. This shortens the communication time for determining whether or not the current communication is authorized.

In a second aspect of the present invention, the strength measurement signal transmission circuit transmits, for a number of times, a set of a command for the communication terminal and the received signal strength measurement signal. Further, the communication terminal operates in accordance with the command and performs wireless bidirectional communication with the communication master.

In the second aspect, the communication master transmits a command to which the received signal strength measurement signal is added. Thus, the communication master can set a command for having the communication terminal perform an operation.

In a third aspect of the present invention, the strength measurement signal transmission circuit transmits the received signal strength measurement signal with a strength that is set taking into account a measurement error of the received signal strength.

In the third aspect, when there is a difference between the received signal strength measurement results, such difference would be recognized even when there is a measurement error. This increases the determination accuracy.

In a fourth aspect of the present invention, the single wireless bidirectional communication session includes transmitting a wake signal from the communication master to the communication terminal and activating the communication terminal, transmitting an acknowledgment signal from the activated communication terminal to the communication master, transmitting a challenge code used to perform challenge-response authentication from the communication master, which has received the acknowledgment signal, to the communication terminal, and transmitting a response code, which includes the result of a computation performed on the challenge code, from the communication terminal to the communication master. The strength measurement signal transmission circuit transmits the wake signal, to which the received signal strength measurement signal has been added, to the communication terminal. The measurement result transmission circuit transmits the response signal, to which the received signal strength measurement result has been added, to the communication master.

In the fourth aspect, the communication master adds the received signal strength measurement signal to the wake signal. This advances the measurement timing of the received signal strength at the communication terminal. Further, the measurement result transmission circuit adds the received signal strength measurement strength to the response signal and transmits the response signal to the communication master. Thus, the difference between the received signal strength measurement results need be checked only the challenge-response authentication is established. In this manner, the difference of the received signal strength measurement results are checked only when the challenge-response authentication is established.

In a fifth aspect, the unauthorized communication establishment prevention system further includes a noise measurement circuit that transmits the received signal strength measurement signal as a signal having zero transmission strength and measures noise in a communication environment in accordance with a received signal strength measurement result of the signal having zero transmission strength.

In the fifth aspect, when noise is present in a communication environment, a received signal strength measurement signal transmitted with zero transmission strength is received with non-zero strength due to noise. The received signal strength measurement result reflects the measurement result of noise. Thus, the noise measurement circuit can determine whether or not noise is present in the communication environment based on the receive signal strength measurement result. As a result, when, for example, noise is present in the communication environment, the current communication may be invalidated. This would ensure the communication reliability.

In one aspect, the strength measurement signal transmission circuit and the check circuit are arranged in the communication master, and the received signal strength measurement circuit and the measurement result transmission circuit are arranged in the communication terminal.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram of a system for preventing establishment of unauthorized communication according to one embodiment of the present invention;
Fig. 2 is a diagram illustrating unauthorized communication that uses a relay;
Fig. 3 is a chart showing a communication sequence of the system for preventing establishment of unauthorized communication;
Fig. 4 is a diagram showing authorized smart communication;
Fig. 5 is a diagram showing unauthorized smart communication; and
Fig. 6 is a communication sequence of a system for preventing establishment of unauthorized communication that measures noise.

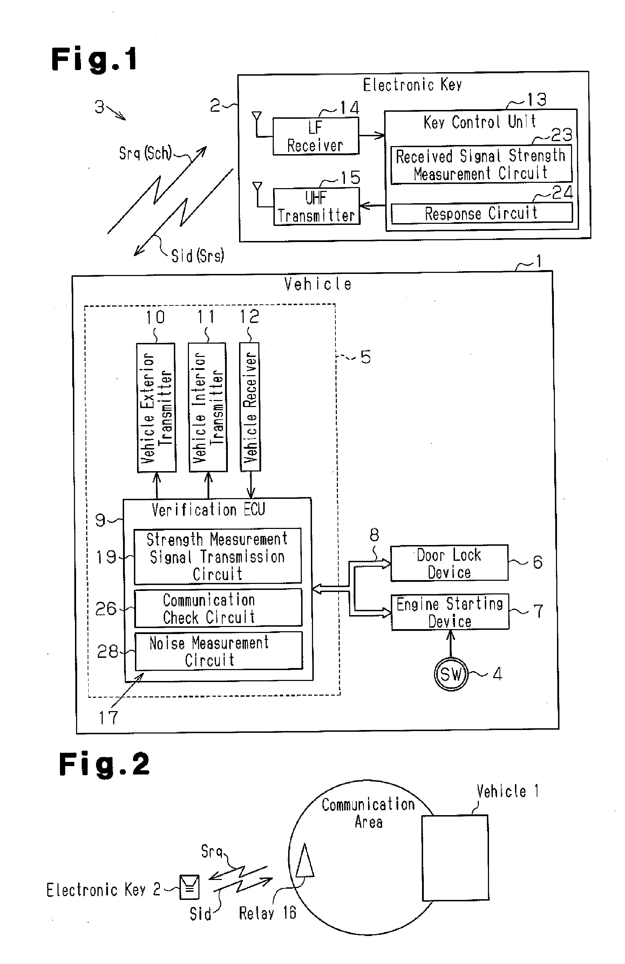

A system for preventing establishment of unauthorized communication according to one embodiment of the present invention will now be described with reference to Figs. 1 to 6.

Referring to Fig. 1, a vehicle 1 includes a key-operation-free system 3, which performs wireless communication between the vehicle 1 and an electronic key 2 and performs identification (ID) verification on the electronic key 2. The key-operation-free system 3 includes a door locking function, which automatically locks and unlocks the vehicle doors without any manual operation of the electronic key 2, and an engine operating function, which requires only the pushing of an engine switch 4 in the vehicle passenger compartment to start and stop the engine. The electronic key 2 corresponds to a communication terminal.

The vehicle 1 includes a key verification device, which performs wireless communication with the electronic key 2 to execute ID verification, a door lock device 6, which manages the locking and unlocking of the vehicle doors, and an engine starting device 7, which manages the operation of the engine. An in-vehicle bus 8 connects the devices 5, 6, and 7. The key verification device 5 includes a verification electronic control unit (ECU) 9, which serves as a control unit for the key verification device 5. The verification ECU 9 includes a memory (not shown). An ID code of the electronic key 2, which is associated with the vehicle 1, is registered to the memory. The verification ECU 9 is connected to a vehicle exterior transmitter 10, which transmits a radio wave on a low frequency (LF) band in a vehicle exterior communication area (e.g., a range of several meters from the vehicle), a vehicle interior transmitter 11, which transmits a radio wave on the LF band to the entire passenger compartment in the vehicle 1, and a vehicle receiver 12, which receives a radio wave on the UHF band. The vehicle exterior transmitter 10 and the vehicle interior transmitter 11 intermittently transmit the request signal Srq to the vehicle exterior communication area at a controlled timing and perform vehicle exterior smart communication (wireless bidirectional communication). The key verification device 5 corresponds to a communication master.

The electronic key 2 includes a key control unit 13, which manages the operation of the electronic key 2. The key control unit 13 includes a memory (not shown). The ID code of the electronic key 2 is registered to the memory. The key control unit 13 is connected to an LF receiver 14, which receives LF radio waves, and a UHF transmitter 15, which transmits UHF radio waves.

When the electronic key 2 is located outside the vehicle 1, the vehicle exterior transmitter 10 intermittently transmits the request signal Srq to the vehicle exterior communication area at a controlled timing and performs vehicle exterior smart communication. When the electronic key 2 enters the vehicle exterior communication area and receives the request signal Srq, the electronic key 2 is activated by the request signal Srq. This transmits the ID signal Sid on the UHF radio wave from the electronic key 2. When the vehicle receiver 12 receives the ID signal Sid, the verification ECU 9 uses the ID code registered in its memory to perform ID verification (smart verification), or vehicle exterior verification. When vehicle exterior verification is accomplished, the verification ECU 9 permits the locking and unlocking of the vehicle doors with the door lock device 6.

When a courtesy switch (not shown), for example, detects the user entering the vehicle 1, the vehicle interior transmitter 11 takes the place of the vehicle exterior transmitter 10 and starts transmitting the request signal Srq. When ID verification (smart verification), that is, vehicle interior verification, is accomplished, the verification ECU permits the starting of the engine when the engine switch 4, which is of a push-momentary type, is operated.

The smart verification performed by the vehicle 1 and the electronic key 2 includes challenge-response authentication that ensures authentication security. In the challenge-response authentication, the vehicle 1 transmits a challenge code Sch, which is a random number, to the electronic key 2 through wireless communication. The electronic key 2 performs a computation on the received challenge code Sch to generate a response code. The electronic key 2 transmits a response signal Srs, which includes the response code, to the vehicle 1. The vehicle 1 also computes a response code and checks whether this response code conforms to the response code in the response signal Srs from the electronic key 2. When the ID code verification and response authentication are both accomplished, the verification ECU 9 determines that key verification has been accomplished.

The key-operation-free system 3 includes an unauthorized communication establishment prevention system 17, which prevents unauthorized establishment of smart communication that uses, for example, a relay 16 as shown in Fig. 2. Unauthorized communication using the relay 16 is an act performed by a person that accomplishes smart verification in a wrongful manner using the relay 16 to relay radio waves when the electronic key 2 is distant from the vehicle 1.

The relay 16 relays the contents of the data in the received radio waves but is not able to relay radio waves with the same strength as when the radio waves were received by the relay 16. A received signal strength indication of the radio wave at the electronic key 2 is a parameter used to determine whether the current smart communication is authorized communication performed by only the electronic key 2 or unauthorized communication performed via the relay 16. The unauthorized communication establishment prevention system 17 of the present example determines whether or not the smart communication is authorized communication from the received signal strength at the electronic key 2.

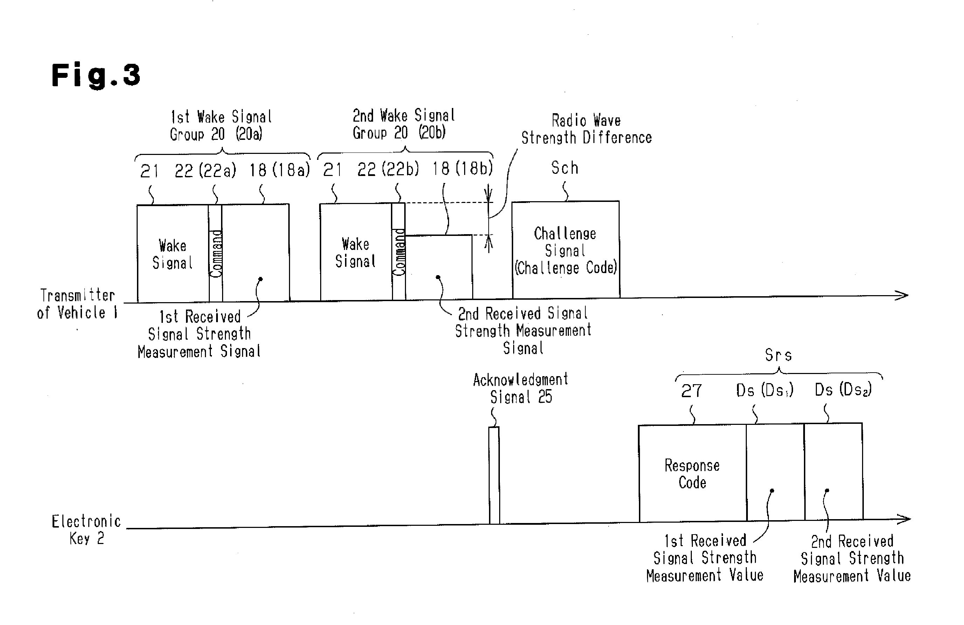

As shown in Fig. 1, the verification ECU 9 includes a strength measurement signal transmission circuit 19, which transmits a received signal strength measurement signal 18 for a number of times with different strengths during a single smart communication session. As shown in Fig. 3, the strength measurement signal transmission circuit 19 inserts the received signal strength measurement signal 18 in a wake signal group 20, which activates the electronic key 2 that is in a standby (sleep) state. Then, the strength measurement signal transmission circuit 19 transmits the wake signal group 20 on LF radio waves for a number of times (twice in the example of Fig. 3). In the present example, the wake signal groups 20 are consecutively transmitted, with the first transmitted wake signal group 20 referred to as a first wake signal group 20a, and the second transmitted wake signal group 20 referred to as a second wake signal group 20b. The strength measurement signal transmission circuit 19 corresponds to a strength measurement signal transmitting means.

Each of the wake signal groups 20a and 20b includes a wake signal 21, which has a wake pattern, a command 22, which instructs operation of the electronic key 2, and the received signal strength measurement signal 18. The received signal strength measurement signal 18 is a radio wave having fixed electric field strength. The received signal strength measurement signal 18 in the first wake signal group 20a is referred to as a first received signal strength measurement signal 18a, and the received signal strength measurement signal 18 in the second wake signal group 20b is referred to as a second received signal strength measurement signal 18. The difference in radio wave strengths of the first received signal strength measurement signal 18a and the second received signal strength measurement signal 18b at the point of time when transmission occurs may be set to a value that is large enough to allow it to be distinguished from the radio wave strength at the point of time when the signals 18a and 18b are received even when there is a measurement error. In the illustrated embodiment, the strengths of the first received signal strength measurement signal 18a and the second received signal strength measurement signal 18b are not zero.

The key control unit 13 includes a received signal strength measurement circuit 23, which measures the received signal strength of each received signal strength measurement signal 18 received from the vehicle 1. The received signal strength measurement circuit 23 corresponds to a received signal strength measurement means.

The key control unit 13 includes a response circuit 24 that cooperates with the vehicle 1 to perform smart communication. When the response circuit 24 receives the wake signal group 20 from the vehicle 1, the response circuit 24 responds to the vehicle in accordance with the command in the wake signal group 20. When receiving the wake signal 21 twice, the response circuit 24 of the present example transmits an acknowledgment signal 25 to notify the vehicle 1 that the electronic key 2 has been activated. The response circuit 24 corresponds to a measurement result transmission circuit.

When the challenge code Sch is received from the vehicle 1, the response circuit 24 returns a response signal Srs to the vehicle 1. The response signal Srs is generated by adding a received signal strength measurement result Ds to the response code 27. For example, when two received signal strength measurement signals 18a and 18b are received from the vehicle 1, the response circuit 24 inserts a first received signal strength measurement value Ds1, which is the received signal strength measurement result of the first received signal strength measurement signal 18a, and a second received signal strength measurement value Ds2, which is the received signal strength measurement result of the second received signal strength measurement signal 18b, in the response signal Srs. In one embodiment, as illustrated in Fig. 3, the transmission of two or more received signal strength measurement signals 18 and the transmission of a single response signal Srs (response code 27) in response to the two or more received signal strength measurement signals 18 are one example of a single wireless bidirectional communication session or a single smart communication session.

The verification ECU 9 includes a communication check circuit 26 that checks whether or not the current smart communication is authorized communication based on the received signal strength measurement values Ds1 and Ds2 from the electronic key 2. When there is a difference between the received signal strength measurement values Ds1 and Ds2, the communication check circuit 26 determines that the current smart communication is authorized communication. When there is no difference between the received signal strength measurement values Ds1 and Ds2, the communication check circuit 26 determines that the current smart communication is unauthorized communication.

The operation of the unauthorized communication establishment prevention system 17 will now be described with reference to Figs. 3 to 6. Here, vehicle exterior smart communication will be given as an example.

Referring to Fig. 3, the strength measurement signal transmission circuit 19 transmits the first wake signal group 20a from the vehicle exterior transmitter 10 on the LF radio wave. The first wake signal group 20a is transmitted as a set of a wake signal 21, a first command 22a, and a first received signal strength measurement signal 18a. The first command 22a is not a command for returning an acknowledgment signal 25 to the electronic key 2 in response to the wake signal 21. Rather, the first command 22a is a command that instructs the electronic key 2 to measure the received signal strength of the first received signal strength measurement signal 18a.

When the electronic key 2 receives the first wake signal group 20a, the wake signal 21 in the first wake signal group 20a switches the electronic key 2 from a standby state to an activated state. In accordance with the first command 22a, the response circuit 24 shifts to received signal strength measurement of the first received signal strength measurement signal 18a and holds the measurement result (first received signal strength measurement value Ds1) in the memory of the key control unit 13.

The electronic key 2 is activated by the wake signal 21 but does not return the acknowledgment signal 25 and waits until the next radio wave is received. That is, when the response circuit 24 receives the first wake signal group 20a, the response circuit 24 measures the first received signal strength measurement signal 18a in accordance with the first command 22a and waits until receiving the next radio wave even though the electronic key 2 is activated by the wake signal 21.

Then, the strength measurement signal transmission circuit 19 transmits the second wake signal group 20b on the LF radio wave from the vehicle exterior transmitter 10 after a predetermined time elapses from the transmission of the first wake signal group 20a. The second wake signal group 20b is transmitted as a set of a wake signal 21, a second command 22b, and a second received signal strength measurement signal 18b. The second command 22b is a command that instructs the electronic key 2 to measure the received signal strength of the second received signal strength measurement signal 18b and then to send an acknowledgment signal 25 after the measurement.

When the electronic key 2 receives the second wake signal group 20b, the electronic key 2 checks the wake pattern of the wake signal 21 in the second wake signal group 20b. When the wake pattern is correct, the response circuit 24 performs received signal strength measurement of the second received signal strength measurement signal 18b in accordance with the second command 22b. The received signal strength measurement circuit 23 measures the received signal strength of the second received signal strength measurement signal 18b and holds the measurement result (second received signal strength measurement value Ds2) in the memory of the key control unit 13.

When the response circuit 24 receives the second wake signal group 20b, the response circuit 24 transmits an acknowledgment signal 25 on the UHF radio wave.

When the verification ECU 9 receives the acknowledgment signal 25 from the electronic key 2 within a predetermined time from when the transmission of the second wake signal 20b is completed, the verification ECU 9 determines that smart communication with the electronic key 2 has been established. When the verification ECU 9 determines that smart communication has been established, the verification ECU 9 transmits the challenge code Sch on the LF radio wave from the vehicle exterior transmitter 10. The challenge code Sch is a random number that is changed for each transmission.

When the electronic key 2 receives the challenge code Sch within a predetermined time from the transmission of the acknowledgment signal 25, the electronic key 2 performs a computation on the challenge code Sch using an encryption key of the electronic key 2 to generate a response code 27. After the generation of the response code 27, the electronic key 2 sends the response signal Srs to the vehicle 1. The response signal Srs includes the response code 27, the first received signal strength measurement value Ds1, and the second received signal strength measurement value Ds2.

When the verification ECU 9 transmits the challenge code Sch to the electronic key 2, the verification ECU 9 computes a response code using its encryption key and the challenge code and holds the response code. The verification ECU 9 checks the response code 27 in the response signal Srs received by the vehicle receiver 12. When the received response code 27 conforms to the computed response code, the verification ECU 9 determines that the challenge-response authentication has been accomplished.

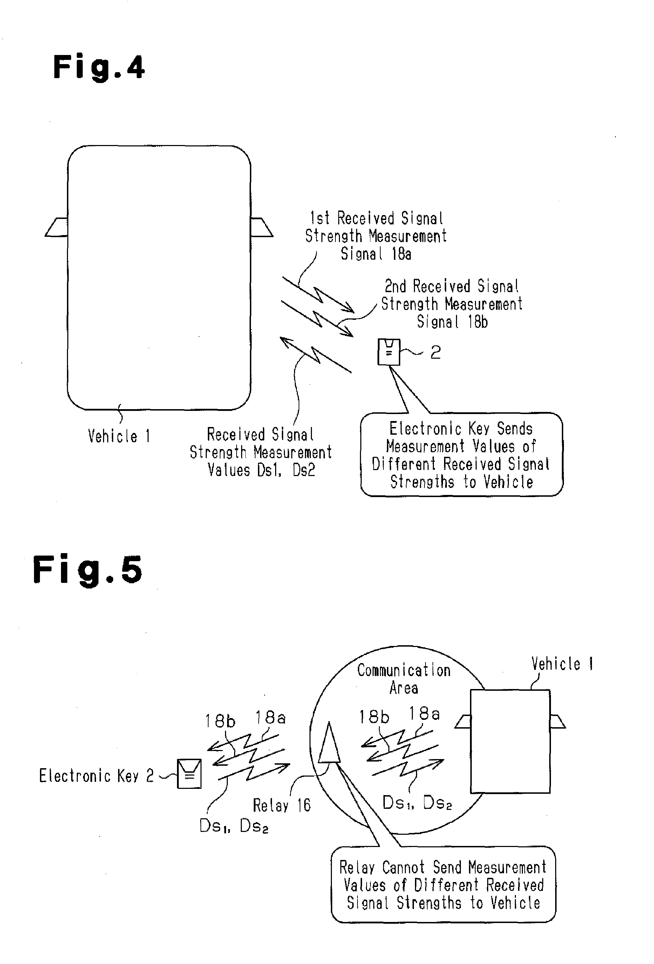

After determining that the challenge-response authentication has been accomplished, the communication check circuit 26 determines whether or not there is a difference between the first received signal strength measurement value Ds1 and the second received signal strength measurement value Ds2. Referring to Fig. 4, when the current smart communication is authorized communication, there is a difference between the received signal strength measurement values Ds1 and Ds2. Thus, when a difference between the received signal strength measurement values Ds1 and Ds2 is detected, the communication check circuit 26 determines that the current smart communication is authorized communication.

Referring to Fig. 5, when the current smart communication is unauthorized communication, there is no difference between the received signal strength measurement values Ds1 and Ds2 because the relay 16 cannot copy the received signal strength. Thus, when there is no difference between the received signal strength measurement values Ds1 and Ds2, the communication check circuit 26 determines that the current smart communication is unauthorized communication. Accordingly, even when someone attempts to accomplish smart verification with the relay 16, the communication is processed as unauthorized communication, and smart verification is not accomplished.

The unauthorized communication establishment prevention system 17 may measure noise under a communication environment for smart communication and reflect such measurement on the smart communication. In this case, the verification ECU 9 includes a noise measurement circuit 28 that transmits the received signal strength measurement signal 18 as a blank signal (zero transmission strength) and measures noise under a communication environment. The noise measurement circuit 28 measures noise based on a received signal strength measurement result Ds sent from the electronic key 2 in response to the received signal strength measurement signal 18 having zero transmission strength. The noise measurement circuit 28 corresponds to a noise measuring means.

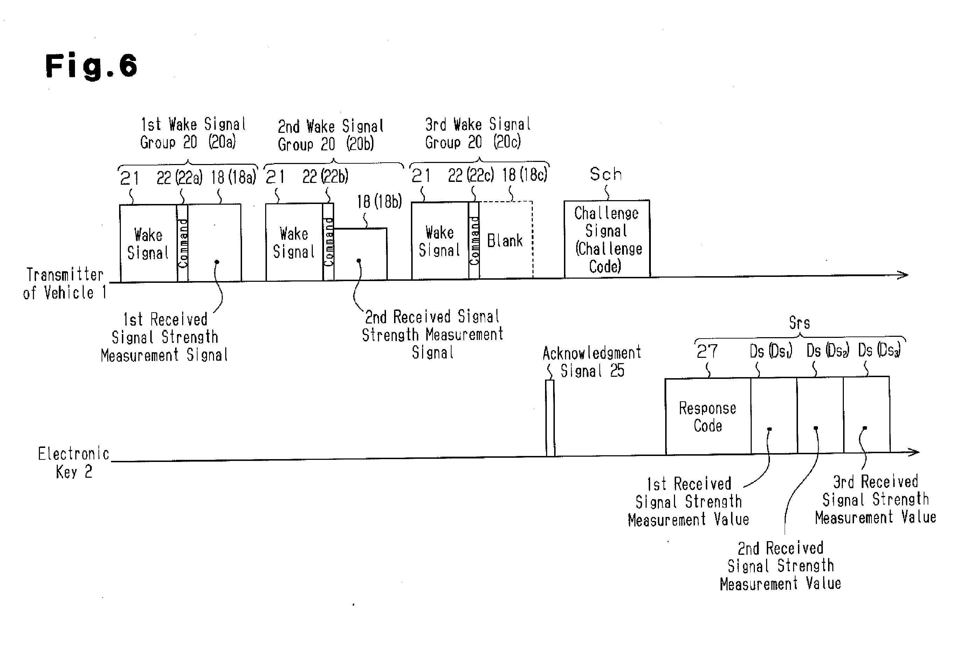

One example will now be described with reference to Fig. 6. After the second wake signal group 20b, the noise measurement circuit 28 transmits a third wake signal group 20c, which serves as a noise measurement signal, on the LF radio wave from the vehicle exterior transmitter 10. The third wake signal group 20c is transmitted as a set of a wake signal 21, a third command 22c, and a third received signal strength measurement signal 18c having zero transmission strength. The third command 22c is a noise measurement command that instructs the electronic key 2 to measure the received signal strength of the third received signal strength measurement signal 18c and send an acknowledgment signal 25 after the measurement. In the example of Fig. 6, when the second wake signal group 20b is received, the response circuit 24 of the electronic key 2 measures the received signal strength of the second received signal strength measurement signal 18b in accordance with the second command 22b. Then, the response circuit 24 waits until receiving the next radio wave.

When the electronic key 2 receives the third wake signal group 20c, the electronic key 2 checks the wake pattern of the wake signal 21 in the third wake signal group 20c. When the wake pattern is correct, the response circuit 24 measures the received signal strength of the third received signal strength measurement signal 18c. The received signal strength measurement circuit 23 holds the measurement result (second received signal strength measurement value Ds3) in the memory of the key control unit 13.

After receiving the challenge code Sch, the electronic key 2 transmits a response signal Srs. The response signal Srs includes a response code 27, a first received signal strength measurement value Ds1, a second received signal strength measurement value Ds2, and a third received signal strength measurement value Ds3.

After challenge―response authentication is established, the communication check circuit 26 measures noise under a communication environment in accordance with the third received signal strength measurement value Ds3. When there is no noise under a communication environment, the third received signal strength measurement value Ds3 is zero or a value approximate to zero. Thus, when the third received signal strength measurement value Ds3 is zero or a value approximate to zero, the noise measurement circuit 28 determines that there is no noise under a communication environment. In accordance with this determination, the verification ECU 9 validates the current smart communication.

When noise is present in a communication environment, the third received signal strength measurement value Ds3 is a value that is in accordance with the noise. When the third received signal strength measurement value Ds3 is greater than or equal to a predetermined value (reference value), the noise measurement circuit 28 determines that noise is present in the communication environment. In accordance with the determination, the verification ECU 9 invalidates the current smart communication and retries smart communication since the current smart communication may be affected by noise.

As described above, in the present embodiment, the received signal strength measurement signal 18 is transmitted a number of times with different radio wave strengths during a single smart communication session, and the electronic key 2 measures the received signal strength of each received signal strength measurement signal 18. Then, the electronic key 2 transmits a response signal Srs including the received signal strength measurement values Ds1 and Ds2 to the vehicle 1. Based on the difference of the received signal strength measurement values Ds1 and Ds2, the unauthorized communication establishment prevention system 17 determines whether or not the current smart communication is authorized. Thus, it can be determined whether authorized or unauthorized communication is being performed during a single smart communication session. This shortens the communication time for determining such unauthorized communication.

Referring to Fig. 6, when the wake signal 21 is transmitted to the electronic key 2 from the vehicle 1, the third command 22c for noise measurement and the third received signal strength measurement signal 18c having zero transmission strength may be transmitted to determine whether or not noise is present in the communication environment. Thus, when noise is present in the communication environment, the current smart communication can be invalidated. This ensures the reliability of the smart communication.

The present embodiment has the advantages described below.
(1) During a single smart communication session, the unauthorized communication establishment prevention system 17 transmits, from the vehicle 1, the received signal strength measurement signal 18 a number of times with different radio wave strengths, and the electronic key 2 measures the received signal strength of each received signal strength measurement signal 18. Based on the received signal strength measurement values Ds1 and Ds2, which is the measurement result, the unauthorized communication establishment prevention system 17 determines whether or not the current smart communication is authorized or unauthorized. This shortens the communication time for determining whether or not the smart communication is authorized.
(2) When transmitting the received signal strength measurement signal 18 from the vehicle 1 to the electronic key 2, the command 22 is added to the received signal strength measurement signal 18 to instruct the electronic key 2 of an operation that is to be performed. In this manner, the operation that is to be performed by the electronic key 2 is set by the command. This increases the communication freedom. Thus, the communication mode can be freely changed. For example, the number of wake signal groups 20 can be changed in accordance with a corresponding situation.
(3) The radio wave strength difference of the first received signal strength measurement signal 18a and the second received signal strength measurement signal 18b is set to be a value that is greater than a measurement error that may occur during communication. Thus, for example, when there is a difference between the received signal strength measurement values Ds1 and Ds2, such difference would be recognized even when there is a measurement error. This ensures the determination accuracy.
(4) The received signal strength measurement signal 18 is added to the wake signal 21, and the electronic key 2 measures the received signal strength. Thus, the received signal strength is calculated at an early stage by the signal that is first transmitted during smart communication. Further, the received signal strength measurement values Ds1 and Ds2 are added to the response signal Srs and transmitted to the vehicle 1. Thus, the received signal strength measurement values Ds1 and Ds2 need only be checked when the challenge-response authentication is accomplished. In this manner, the difference of the received signal strength measurement values Ds1 and Ds2 is checked only when necessary.
(5) The third command 22c for noise measurement and the third received signal strength measurement signal 18c having a zero transmission strength are transmitted from the vehicle 1 to the electronic key 2 to determine whether or not noise is present in the communication environment. This allows for the presence or non-presence of noise to be reflected to the smart communication and increases the reliability of smart communication.

It should be apparent to those skilled in the art that the present invention may be embodied in many other specific forms without departing from the scope of the invention. Particularly, it should be understood that the present invention may be embodied in the following forms.

The determination of whether or not authorized smart communication is being performed does not have to be based on whether there is a difference between the received signal strength measurement values Ds1 and Ds2. For example, authorized smart communication may be determined based on whether or not the ratio of the received signal strength measurement values Ds1 and Ds2 conforms to the ratio of the received signal strength measurement signals 18a and 18b.

The received signal strength measurement signal 18 does not have to be added to the wake signal 21. For example; the vehicle 1 may transmit the challenge code Sch two or more times, add the received signal strength measurement signal 18 to each challenge code Sch, and transmit the received signal strength measurement signals 18 with different strengths. In this case, the transmission of two or more challenge codes Sch and the transmission of a single response signal Srs (response code 27) in response to the two or more challenge codes Sch are one example of a single wireless bidirectional communication session or a single smart communication session.

When the received signal strength measurement signal 18 is transmitted a number of times with different strengths, the wake signal 21 may be added to the first received signal strength measurement signal 18 and the challenge code Sch may be added to the second received signal strength measurement signal 18.

The number of times the received signal strength measurement signal 18 is transmitted is not limited to two and may be three or more.

The received signal strength measurement signal 18 does not have to be added to the response signal Srs and may be added to the acknowledgment signal Ack.

The communication master is not limited to the key verification device 5 and may be changed to another device. Further, the communication terminal is not limited to the electronic key 2 and may be another type of a terminal such as an IC card.

The wireless bidirectional communication is not limited to smart communication and may be another type of communication.

The frequencies used for the wireless bidirectional communication are not limited to LF and UHF and may be other frequencies, such as a high frequency (HF).

The wireless bidirectional communication may be, for example, near field communication (NFC) or the like.

The communication distance for the wireless bidirectional communication is not limited to several meters and may be changed as required.

The authentication performed during the wireless bidirectional communication is not limited to the challenge-response authentication and may be, for example, an authentication for transmitting only the ID code to the vehicle 1.

The electronic key system is not limited to the key-operation-free system 3 and may be a wireless key system that starts ID verification by, for example, the transmission of a signal from the electronic key 2.

The unauthorized communication establishment prevention system 17 is not limited to vehicle exterior smart communication and may also be applied to vehicle interior smart communication.

The above-described modifications may be combined with one another.

The present examples and embodiments are to be considered as illustrative and not restrictive, and the invention is not to be limited to the details given herein, but may be modified within the scope and equivalence of the appended claims.

## Claims

1. An unauthorized communication establishment prevention system (17) that prevents unauthorized establishment of wireless bidirectional communication between a communication master (5) and a communication terminal (2), the system (17) comprising:
a strength measurement signal transmission circuit (19) that transmits a received signal strength measurement signal (18), which is used to measure a received signal strength at the communication terminal (2), a number of times with different transmission strengths during a single wireless bidirectional communication session;
a received signal strength measurement circuit (23) that measures the received signal strength of the received signal strength measurement signal (18) whenever the received signal strength measurement signal (18) is received by the communication terminal (2);
a measurement result transmission circuit (24) that transmits a plurality of received signal strength measurement results as a single response signal (Srs) to the communication master (5) from the communication terminal (2) during the single communication session; and
a check circuit (26) that checks whether or not the current bidirectional communication is authorized based on the received signal strength measurement results from the communication terminal (2).

2. The unauthorized communication establishment prevention system (17) according to claim 1, wherein
the strength measurement signal transmission circuit (19) transmits, for a number of times, a set of a command for the communication terminal (2) and the received signal strength measurement signal (18), and
the communication terminal (2) operates in accordance with the command and performs wireless bidirectional communication with the communication master (5).

3. The unauthorized communication establishment prevention system (17) according to claim 1 or 2, wherein the strength measurement signal transmission circuit (19) transmits the received signal strength measurement signal (18) with a strength that is set taking into account a measurement error of the received signal strength.

4. The unauthorized communication establishment prevention system (17) according to any one of claims 1 to 3, wherein the single wireless bidirectional communication session includes:
transmitting a wake signal from the communication master (5) to the communication terminal (2) and activating the communication terminal (2);
transmitting an acknowledgment signal from the activated communication terminal (2) to the communication master (5);
transmitting a challenge code used to perform challenge-response authentication from the communication master (5), which has received the acknowledgment signal, to the communication terminal (2); and
transmitting a response code, which includes the result of a computation performed on the challenge code, from the communication terminal (2) to the communication master (5), wherein
the strength measurement signal transmission circuit (19) transmits the wake signal, to which the received signal strength measurement signal (18) has been added, to the communication terminal (2), and
the measurement result transmission circuit (24) transmits the response signal (Srs), to which the received signal strength measurement result has been added, to the communication master (5).

5. The unauthorized communication establishment prevention system (17) according to any one of claims 1 to 4, further comprising a noise measurement circuit that transmits the received signal strength measurement signal (18) as a signal having zero transmission strength and measures noise in a communication environment in accordance with a received signal strength measurement result of the signal having zero transmission strength.

6. The unauthorized communication establishment prevention system (17) according to any one of claims 1 to 5, wherein
the strength measurement signal transmission circuit (19) and the check circuit (26) are arranged in the communication master (5), and
the received signal strength measurement circuit (23) and the measurement result transmission circuit (24) are arranged in the communication terminal (2).
